# EUROPEAN PATENT SPECIFICATION

(11) **EP 3 202 247 B1**
(45) Date of publication and mention of the grant of the patent: **20.06.2018**
(21) Application number: 16207435.5
(22) Date of filing: 30.12.2016
(51) Int. Cl.: A01D 34/416

(54) **CRUCIFORM TRIMMER LINE**
KREUZFÖRMIGER TRIMMERFADEN
FIL DE DÉBROUSSAILLAGE CRUCIFORME

(30) Priority: 30.12.2015 TW 104144541
(43) Date of publication of application: 09.08.2017
(73) Proprietor: Yao I Fabric Co., Ltd., Changhua County 508 (TW)
(72) Inventor: Liu, Yen-Ting, CHANGHUA COUNTY 508 (TW)
(74) Representative: Becker Kurig Straus

(56) References cited:
- EP-A1- 0 764 398
- FR-A1- 2 625 865
- TW-U- M 484 297
- US-A- 4 186 239
- US-B2- 7 607 233

## Description

### BACKGROUND OF THE INVENTION

### Field of the Invention

The present invention relates to trimmer lines and, more particularly, to a trimmer line for use with a trimmer head.

### Description of the Prior Art

A conventional string trimmer with a trimmer line essentially comprises a line body of an appropriate length. A portion of the line body is fixedly disposed at a trimmer head of the string trimmer. The other portions of the line body are exposed from the cutter to serve as a cutting purpose.

In general, the trimmer line typically has a round cross section and is laterally knife-shaped to "form a cutting portion; For instance, -Taiwan utility model .patent M484297 discloses a trimmer line with a hollow core therein so as to enhance its structural strength. The trimmer line has a polygonal cross section so that the angular edges thereof function as cutting edges. All the cutting edges extend along a longitudinal axis of the trimmer line cut off the middle part of weeds. However, weeds are soft enough to bend instantly as soon as they encounter the cutting edges. Hence, the rotating speed of the trimmer head has to be large enough and the angular edges of the trimmer line have to be sharp enough to cut off the middle part of weeds before bending. Further, US 7,607,233 B2 discloses a cutting wire with all its cutting edges in the form of a saw tooth" (see column 3, line 15), wherein each cutting edge has continuous bends, cones, or teeth to enhance its cutting capacity. However, while the convolutions of the cutting edges serve to concentrate a grass cutting force onto convex portions of the convolutions to thereby enhance the cutting capacity of the cutting edges, the cutting edges are too thin and the convex portions are too small for the cutting edges and the convex portion to be durable in grass cutting and cutting edge sharpening because of force concentration.

Accordingly, it is desired in the market to provide a trimmer line which equips with high cutting capacity and high durability.

### SUMMARY OF THE INVENTION

It is an objective of the present invention to provide a cruciform trimmer line which has advantages low costs but has high structural strength.

It is another objective of the present invention to provide a cruciform trimmer line which has high cutting capacity and efficiency.

It is another objective of the present invention to provide a cruciform trimmer line which has advantages of high durability, long service life, and high reliability.

In order to achieve the above and other objectives, the present invention provides a cruciform trimmer line, comprising a main body, two first protrusions, and two second protrusions. The main body defines a Z-axis and a uniform main cross section. The main cross section has a plurality of contiguous sides. The two first protrusions are disposed on two opposing sides of the main body along the Z-axis. The first protrusions form teeth. Two second protrusions are disposed on the other two opposing sides of the main body along the Z-axis. The second protrusions cross sections are of uniform width.

### BRIEF DESCRIPTION OF THE DRAWINGS

FIG. 1 is a perspective view of a segment of a cruciform trimmer line according to the first embodiment of the present invention;
FIG. 2A is a cross-sectional view taken along line 2A-2A of FIG. 1;
FIG. 2B is a cross-sectional view taken along line 2B-2B of FIG. 1;
FIG. 2C is a cross-sectional view of the cruciform trimmer line according to an embodiment that is not part of the present invention;
FIG. 3 is a cross-sectional view of the cruciform trimmer line according to the second embodiment of the present invention;
FIG. 4 is a cross-sectional view of the cruciform trimmer line according to the third embodiment of the present invention;
FIG. 5 is a laterat view of FIG. 1;
FIG. 6 is a lateral view of the cruciform trimmer line according to the fourth embodiment of the present invention;
FIG. 7 is a lateral view of the cruciform trimmer line according to the fifth embodiment of the present invention;
FIG. 7A is a cross-sectional view taken along line 7A-7A of FIG. 7;
FIG. 8 is a top view of FIG. 1;
FIG. 9 is a lateral view of a segment of the cruciform trimmer line that is not part of the present invention;
FIG. 10 is a perspective view of a segment of the cruciform trimmer line according to the sixth embodiment of the present invention; and
FIG. 11 is a lateral view of FIG. 10.

### DETAILED DESCRIPTION OF THE EMBODIMENT OF THE INVENTION

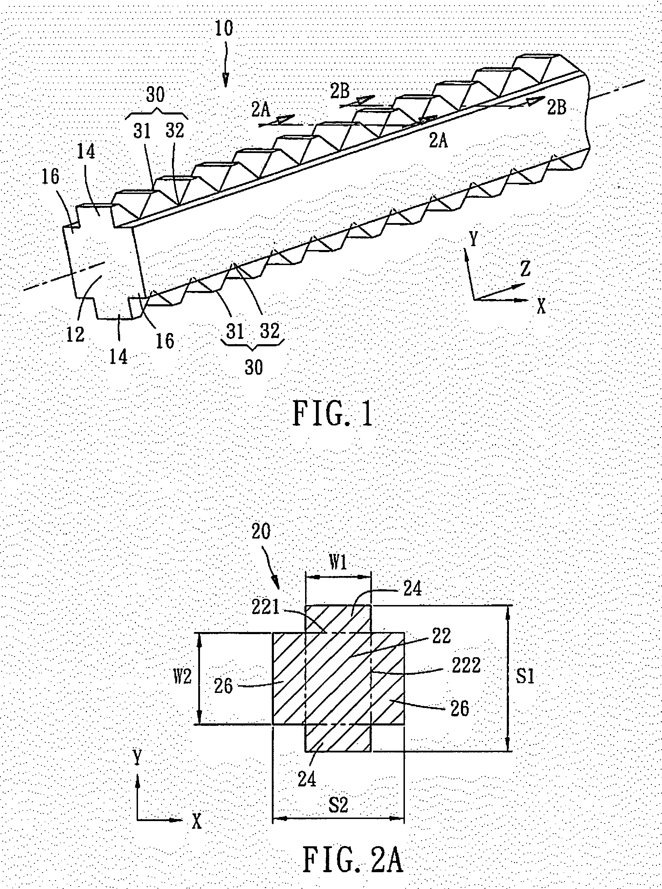

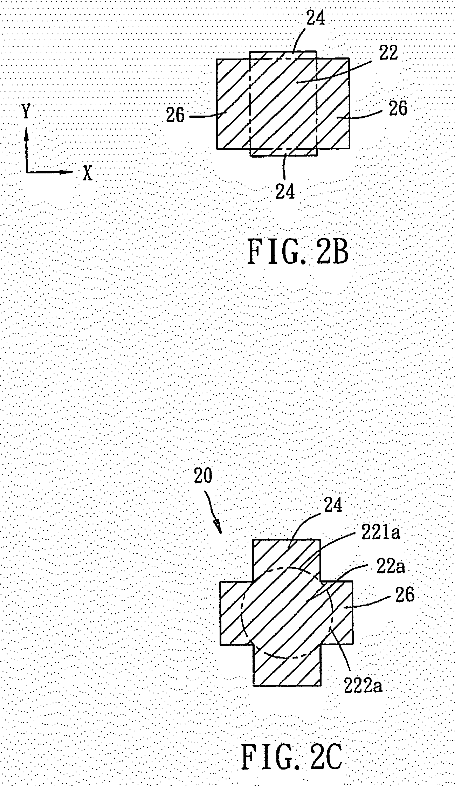

Referring to FIGs. 1∼2B, a cruciform trimmer line in the first embodiment of the present invention is substantially slender, flexible and has a line body 10. Referring to FIGs. 1, 2, the line body 10 has a longitudinal axis extended along a Z-axis (hereinafter Z-axis) and substantially cruciform cross sections 20 which are defined at any points along the Z-axis and perpendicular to the Z-axis. Each of the cross sections 30 has a X-axis extended horizontally (hereinafter X-axis) and a Y-axis extended vertically (hereinafter Y-axis). Each cross section 20 has a substantially rectangular center portion, horizontal protrusion portions extending outward and disposed along the X-axis, and vertical protrusion portions extending outward and disposed along the Y-axis. The vertical protrusion portions are projected onto the X-axis to define a width. The vertical protrusion portions are projected onto the Y-axis to define a height. Each of the horizontal protrusion portions of the cross section 20 has a uniform shape. Each of the vertical protrusion portions of cross section 20 has a uniform width but different heights.

The line body 10 is defined with a Z-axis, an X-axis, and a Y-axis which are perpendicular to each other. A plurality of teeth 30 is disposed at the vertical protrusion portions of the line body 10. Each tooth 30 defines a crest 31, a trough 32, and a plurality of connecting sections having different heights formed by projecting the connecting sections onto the cross section 20 from the crest 31 to the trough 32. The horizontal protrusion portions of each cross section 20 do not have any tooth and thus have uniform height. Hence, unlike its conventional counterparts, the cruciform trimmer line in the first embodiment of the present invention requires less manufacturing process steps but features a large structural surface area, thereby achieving the advantages of low production costs and enhanced structural strength.

Referring to FIG. 2A, according to the cross section 20, a first span S1 is further defined by a distance between the two opposing vertical protrusion portions along the Y-axis and a second span S2 is defined by a distance between the two opposing horizontal protrusion portions along the X-axis.. As shown in FIG. 2A, the first span S1 varies with the variation of the height of two opposing teeth 30 along the Z-axis. The cross sections defined at the crest 31 and the trough 32 have the same width, and thus the teeth 30 have higher structural strength. Therefore, during a cutting process, the cruciform trimmer line of the present invention is characterized in that weeds are admitted to the trough 32 and constrained by tooth faces on both sides of the troughs 32 because of restriction or engagement, in such a way that as the cutting head rotates continuously, weeds are cut off before bending. The first span S1 and the second span S2 both cross the Z-axis, pass through the Z-axis on the cross section 20, and cross each other. The cross section 20 further defines a first width W1 corresponding to the first span S1 and a second width W2 corresponding to the second span S2. The first width W1 is equal to the width formed by projecting the vertical protrusion portions onto the X-axis. The second width W2 is equal to the width formed by projecting the horizontal protrusion portions onto the Y-axis. Neither the first width W1 nor the second width W2 crosses the Z-axis. Both of the first width W1 and the second width W2 of the cross section 20 are uniform. The teeth 30 are consecutively formed along the Z-axis and arranged on at least two opposing sides of the line body 10. In this embodiment, the teeth 30 on the two opposing sides are symmetric to each other. The general specifications of the trimmer line includes 1.65mm, 2.0mm, 2.4mm, 2.7mm, 3.0mm, 3.3mm, 3.7mm, and 4.0mm. With the first span S1 being variable and the second span S2 being invariable, it is feasible to maintain a ratio of the first span S1 to the second span S2 to be ranged from 0.5:1 to 1.3:1 so that the line body 10 meets the specifications thereof during the manufacturing process of the cruciform cross section 20. Further, except the smaller general specification (e.g. 1.65mm and 2.0mm) that may be subject to the limitations of the manufacturing process, the ratio of the first span S1 to the second span S2 is preferred to be controlled from 0.5:1 to 1.2:1.The line body 10 comprises a main body 12, two first protrusion 14 disposed on two opposing sides of the main body 12 along the Z-axis, and two second protrusion 16 disposed on the other two opposing sides of the main body 12 along the Z-axis. The main body 12 has a main cross section 22 which is uniform in shape. The main cross section 22 has a plurality of contiguous sides 221, 222. The teeth 30 are formed on the first protrusions 14, respectively. Each of the first protrusion 14 defines a plurality of first protrusion cross sections 24 that have different heights measured from the crest 31 to the trough 32 along the Z-axis. Each of the first protrusion cross section 24 has a uniform width, namely a first width W1 and thus is as wide as the corresponding sides 221. Each of the second protrusion 16 defines at least a second protrusion cross section 26. Each of the second protrusion cross section 26 has a uniform width, namely a second width W2 and thus is as wide as the corresponding sides 222. The cross section 20 comprises the main cross section 22 of the main body 12, two first protrusion cross sections 24 disposed on two opposing sides 221 of the main section 22, and two second protrusion cross sections 26 disposed on the other two opposing sides 222 of the main section 22. For illustrative sake, two opposing sides 221, 222 of the main section 22 are indicated by imaginary lines, and this applies to other embodiments as well. The distance between the two first protrusion cross sections 24, crossing the Z-axis and projected on the Y-axis, is defined as the first span S1. The distance between the two second protrusion cross sections 26, crossing the Z-axis and projected on the X-axis, is defined as the second span S2.

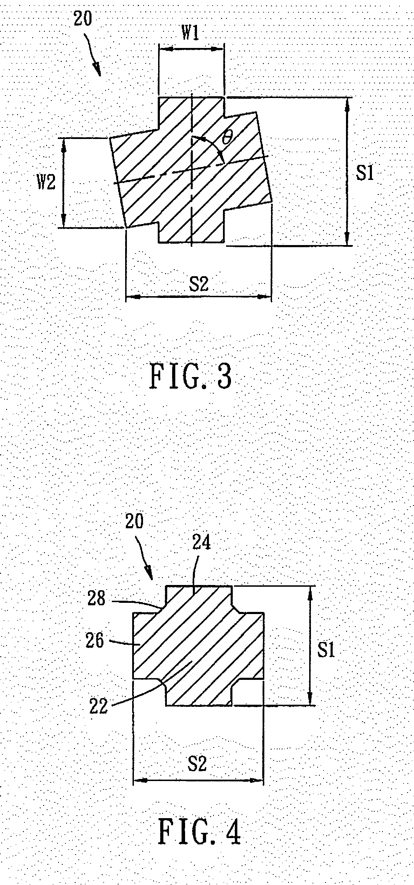

Referring to FIGs. 2A, 2B, the cross section 20 is cruciform and defines a plurality of cross sections with different heights formed by projecting on the cross section 20 from the crest 31 to the trough 32. Preferably, the trough 32 is flush with the surface of the main body 12. Preferably, the crests 31 on two opposing sides are of the same height and are symmetric to each other. The cross section 20 defines an included angle θ by which one of the first protrusions 14 rotates clockwise to the adjacent second protrusion 16. In this embodiment, the included angle θ is a right angle. Referring to FIG. 3, the included angle θ is an acute angle whereby weeds come into contact with the second protrusions 16 instantly as soon as the weeds are constrained by tooth faces on both sides of the troughs 32 because of restriction or engagement.

The main section 22 of the main body 12 may be a polygon, whereas the cross sections are roughly square in shape. Referring to FIG. 2C, that is not part of the present invention, the main body 12 is a cylinder and has a main cross section 22a which is round. The first and second protrusion cross sections 24, 26 are still disposed on sides 221a, 222a of the main cross section 22a, respectively, and the sides 221a, 222a each has a predetermined radius of curvature.

The cruciform trimmer line of the present invention is further characterized in that the main body 12 and the protrusions 14, 16 are made of a single material, such as nylon 6 or a nylon polymer, or made of a composite material which is externally rigid and internally tough to therefore have an outer layer resistant to abrasions and impacts and an inner layer highly resistant to bending, so as to extend the service life, when, for example, the main body 12 is made of nylon 6 or a nylon polymer, and the protrusions 14, 16 are made of nylon 66, nylon 12, or nylon elastomers.

The cruciform trimmer line of the present invention further comprises a plurality of reinforcing ribs. The reinforcing ribs are disposed on the main body 12 along the Z-axis to connect with each first protrusion 14 and each second protrusion 16. Referring to FIG. 4, the plurality of reinforcing rib sections 28 are connected to the first and second protrusion cross sections 24, 26 alternately to further enhance the structural strength of the line body 10. The reinforcing ribs each has a plurality of dents (not shown) corresponding in position to the troughs 32 of the first protrusions 14.

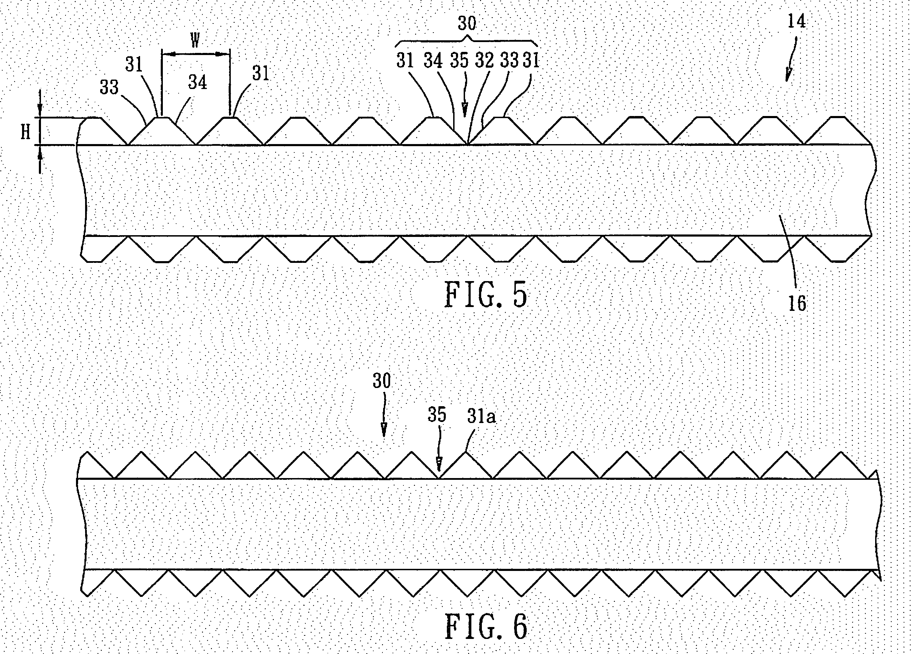

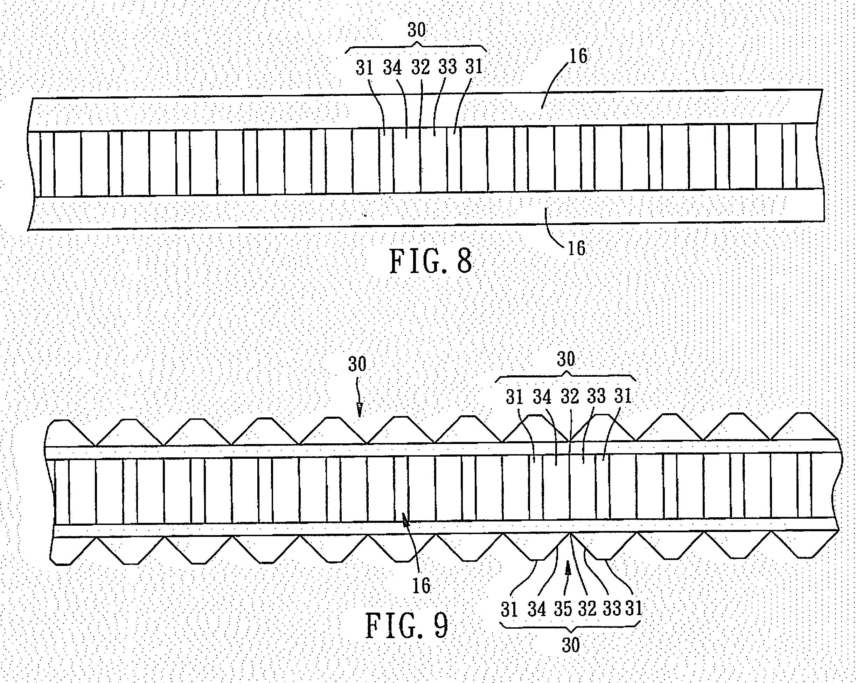

Referring to FIGs. 5, 8, they are a lateral view and a top view, respectively. The cruciform trimmer line of the present invention further defines a longitudinal cross section (not shown) on the Z-axis. Each of the teeth 30 defines a width W and a height H along the longitudinal cross section. Each of the teeth 30 has an aspect ratio (hereinafter W/H) which ranges from 1:1 to 2:1. The general specifications of the line body 10 depend on the first and second spans S1, S2. For example, when one of the first and second spans S1, S2 is 4.0 millimeter (hereinafter mm), the general specification of the radius of the trimmer line is regarded as 4.0mm. The first span S1 of the line body 10 depends on the height H of each tooth 30 and.the height of the main body 12. Hence, keeping the W/H within the range from 1:1 to 2:1 enables each tooth 30 to form a constraining portion 35 for restricting or engaging with weeds readily to thereby prevent the constraining portion 35 from being too large and thus ineffective in restricting weeds and prevent the constraining portion 35 from being too small to contain grass and leaves.

Each tooth 30 further defines two opposing ramps 33, 34 on the longitudinal cross section to ensure that the size of the constraining portion 35 can depend on the two opposing ramps 33, 34 of the tooth 30. Referring to FIG. 5, the two opposing ramps 33, 34 are symmetric to each other and are linear. The size of the constraining portion 35 can also depend on the crest 31 of each tooth 30, it is feasible for the crest 31 to have a platform (not denoted by any reference numeral) whereby the structural strength of the tooth 30 is enhanced, as shown in FIG. 5. The crest 31a is a spike in shape so that the teeth 30 are tightly arranged, as shown in FIG. 6.

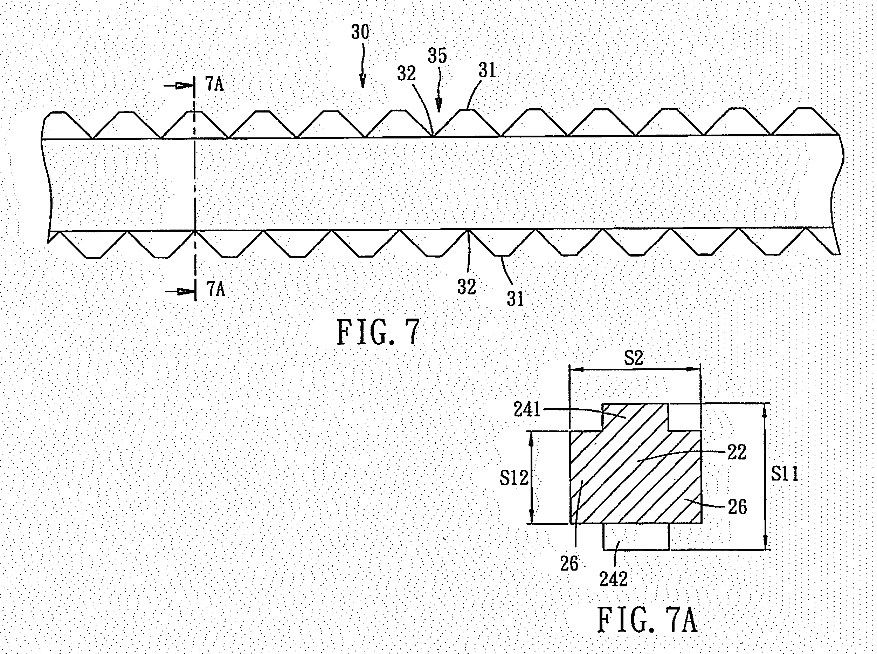

The process of mounting the trimmer line on the cutting head is foolproof, because of the teeth 30 formed on the two opposing sides of the line body 10. Hence, even with its left and right sides reversed, the trimmer line can be mounted on the cutting head as well. Referring to FIG. 7, the teeth 30 on the two opposing sides alternate with each other. Referring to FIG. 7A, since the teeth 30 on the two sides alternate with each other, for illustrative sake, as each of the teeth 30 disposed on the two opposing sides is projected onto the cross section 20, the distance between any two adjacent ones of the troughs 32 on the two opposing sides is defined as a least first span S12, and the distance between any two adjacent ones of the crests 31 on the two opposing sides is defined as a largest first span S11. Hence, the largest first span S11 equals to the distance between a top of the first protrusion cross section 241 of a specific tooth 30 on one side and a top of the first protrusion cross section 242 of an adjacent posterior tooth 30 on the other side, when the teeth 30 on the two opposing sides are projected onto the cross section 20. The least first span S12 seldom necessitates the calculation of the protrusion cross sections; hence, a better option is: the distance of two edges of the main body 12 when the main body 12 is projected onto the cross section 20. The span ratio of the largest first span S11 to the second span S2 and the span ratio of the least first span S12 to the second span S2 are preferred to fall within the range of 1.3:1∼0.5:1, that is, S11/S2: S12/S2= 1.3/1: 0.5/1.

Referring to FIG. 9, that is not part of the present invention, it is a lateral view of a segment of a cruciform trimmer line. The teeth 30 are also formed on the other two opposing sides of the line body 10, that is, the second protrusions 16. From a structural point of view, though forming teeth on the second protrusions 16 shown in FIG. 9 provides less structure strength of the trimmer line than disclosed in FIG. 1, it still provides more structural strength of the trimmer line than disclosed in the prior art because the first and second protrusions 14, 16 of the cross section 20 have uniform width as shown in FIG. 9.

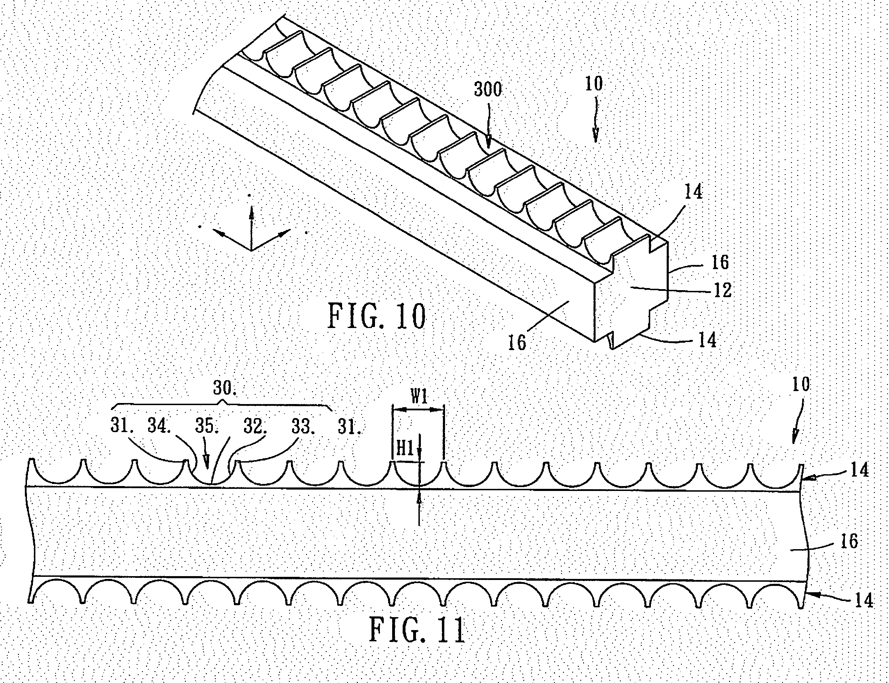

Referring to FIG. 10 and FIG. 11, in the situation where the teeth 30b are contiguously disposed on two first protrusions 14, height H1 depends on a single crest 31b, and width W1 depends on two adjacent crests 31b, wherein the two opposing ramps 33b, 34b are symmetric to each other and are concave, and the troughs 32b are arcs. The constraining portion 35 has a relatively large receiving space.

In conclusion, the cruciform trimmer line of the present invention has at least two advantages as follows: (1) the teeth serve two purposes, i.e., primarily constraining weeds, and secondarily cutting off weeds. The function of cutting off weeds is provided by the cutting edge of each protrusion. The protrusion cross section each has a uniform width, thus enhancing the structural strength of the protrusion and enhancing cutting capacity and efficiency, and (2) the main body and the protrusions are made of a composite material which is externally rigid and internally tough to therefore have an outer layer resistant to abrasions and impacts and an inner layer highly resistant to bending, so as to extend service life and achieve high reliability.

The present invention and its specific embodiments are not limited by the above illustrative description, and its concepts are replaceable and changeable according to the scope of the appended claims.

## Claims

1. A cruciform trimmer line, comprising:
a main body (12) having a longitudinal axis extended along a Z-axis and a uniform main cross section (22);
two first protrusions (14) disposed on two opposing sides (221) of the main body along the Z-axis, each of the first protrusions (14) forming teeth (30); and
two second protrusions (16) disposed on two other opposing sides (222) of the main body (22) along the Z-axis;
**characterized in that** the main cross section (22) has a plurality of contiguous sides (221,222), and **in that** each of the second protrusions (16) has a uniform cross section.

2. The cruciform trimmer line of claim 1, wherein each of the teeth (30) defines a crest (31) and a trough (32); the first protrusions (14) each defines a plurality of first protrusion cross sections (24) having different heights measured from the crest (31) to the trough (32); the first protrusion cross sections (24) each has a uniform first width (W1); the first width (W1) is as wide as corresponding sides (221); the second protrusions (16) each defines at least one second protrusion cross section (26); the at least one second protrusion cross section (26) has a second width (W2) which is as wide as corresponding sides (222).

3. The cruciform trimmer line of claim 1, further comprises a cross section (20) defining a X-axis extended horizontally and a Y-axis extended vertically, the cross section of the main body (12), the two first protrusion cross sections (24), and the two second protrusion cross sections (26); the cross section (20) has a first span (S1) and a second span (S2) each of which crosses the Z-axis; the first span (S1) is defined by a distance between the two first protrusion cross sections (24), crossed by the Z-axis and projected onto the Y-axis; the second span (S2) is defined by a distance between the two second protrusion cross sections (26), crossed by the Z-axis and projected onto the X-axis.

4. The cruciform trimmer line of claim 3, wherein a span ratio of the first span (S1) to the second span (S2) ranges from 0.5:1 to 1.3:1.

5. The cruciform trimmer line of claim 1, wherein the cross section of the main body (12) is rectangular in shape; each of the first protrusions (14) is adjacent to the two second protrusions (16), and each of the second protrusions (16) is adjacent to the two first protrusions (14).

6. The cruciform trimmer line of claim 1, wherein the cross section of the main body (12) is polygonal, and one of the first protrusions (14) is adjacent to at least one of the second protrusions (16).

7. The cruciform trimmer line of claim 1, further comprising a plurality of reinforcing ribs (28), the reinforcing ribs (28) are disposed on the main body (12) along the Z-axis ; each of the reinforcing ribs is connected with the first protrusion (14) and the second protrusion (16).

8. The cruciform trimmer line of claim 1, wherein the teeth (30) of one of the first protrusions (14) alternate with the teeth (30) of the other first protrusions (14).

9. The cruciform trimmer line of claim 1, wherein the main body (12) is made of one of nylon 6 and a nylon polymer.

10. The cruciform trimmer line of claim 1, further comprises a longitudinal cross section; the teeth (30) each defines a width (H1) and a height (W1) along the longitudinal cross section; an aspect ratio of the width (H1) to the height (W1) of each tooth (30) ranges from 1:1 to 2:1.

11. The cruciform trimmer line of claim 1, wherein the main body (12) is made of one of nylon 6 and a nylon polymer, and the first and the second protrusions (14, 16) are made of one of nylon 66, nylon 12, and nylon elastomers.

12. The cruciform trimmer line of claim 1, further comprises a cross section (20); the cross section (20) has the main cross section (22) of the main body (12), the two first protrusion cross sections (24), and the two second protrusion cross sections (26); the cross section (20) each defines an included angle (θ); the included angle (θ) is defined by the first protrusion (14) rotating clockwise to the second protrusion (16); the included angle (θ) is a right angle.

13. The cruciform trimmer line of claim 1, further comprises a cross section (20); the cross section (20) has the main cross section (22) of the main body (12), the two first protrusion cross sections (24), and the two second protrusion cross sections (26); the cross sections (20) each defines an included angle (θ); the included angle (θ) is defined by the first protrusion (14) rotating clockwise to the second protrusion (16); the included angle (θ) is an acute angle.

14. The cruciform trimmer line of claim 1, wherein the teeth (30) each defines a width (W) and a height (H) along the longitudinal section and have an aspect ratio of the width (W) and the height (H) ranges from 1:1 to 2:1.

15. The cruciform trimmer line of claim 14, wherein the teeth (30) each defines a crest (31a) along the longitudinal section, and the crest (31a) is a spike in shape.

16. The cruciform trimmer line of claim 4 **characterized in that**, the span ratio of the first span (S1) to the second span (S2) ranges from 0.5:1 to 1.2:1.

## Patentansprüche

1. Kreuzförmige Schneidegerät-Reihe, welche umfasst:
einen Hauptkörper (12), der sich entlang einer Z-Achse erstreckt, und einen einheitlichen Haupt-Querschnittsbereich (22) aufweist;
zwei erste Vorsprünge (14), die an zwei abgewandten Seiten (221) des Hauptkörpers entlang der Z-Achse vorgesehen sind, worin jeder der ersten Vorsprünge (14) Zähne (30) ausbildet; und
zwei zweite Vorsprünge (16), die an zwei anderen abgewandten Seiten (222) des Hauptkörpers (22) entlang der Z-Achse vorgesehen sind;
**dadurch gekennzeichnet, dass** der Haupt-Querschnitt (22) mehrere zusammenhängende Seiten (221,222) aufweist, und dass jeder der zweiten Vorsprünge (16) einen einheitlichen Querschnittsbereich aufweist.

2. Kreuzförmige Schneidegerät-Reihe nach Anspruch 1, worin jeder Zahn (30) einen Kamm (31) und eine Mulde (32) definiert; worin die ersten Vorsprünge (14) jeweils mehrere erste Vorsprungs-Querschnittsbereiche (24) mit unterschiedlichen Höhen, gemessen vom Kamm (31) zur Mulde (32) definieren; worin die ersten Vorsprungs-Querschnittsbereiche (24) jeweils eine einheitliche Weite (W1) aufweisen; worin die erste Weite (W1) so weit ist, wie entsprechende Seiten (221); worin die zweiten Vorsprünge (16) jeweils mindestens einen zweiten Vorsprungs-Querschnitt (26) definieren; worin der mindestens eine zweite Vorsprungs- Querschnitt (26) eine zweite Weite (W2) aufweist, die so weit ist, wie entsprechende Seiten (222).

3. Kreuzförmige Schneidegerät-Reihe nach Anspruch 1, welche weiter umfasst, einen eine sich horizontal erstreckende X-Achse und eine sich vertikal erstreckende Y-Achse definierenden Querschnitt (20), den Querschnitt des Hauptkörpers (12), die zwei ersten Vorsprungs-Querschnittsbereiche (24), und die zwei zweiten Vorsprungs-Querschnittsbereiche (26); worin der Querschnitt (20) eine erste Spanne (S1) und eine zweite Spanne (S2) aufweist, die jeweils die Z-Achse schneiden; worin die erste Spanne (S1) durch eine Distanz zwischen den zwei ersten Vorsprungs-Querschnittsbereichen (24), die von der Z-Achse geschnitten wird und sich auf die Y-Achse erstreckt definiert ist; worin die zweite Spanne (S2) durch eine Distanz zwischen den zwei zweiten Vorsprungs-Querschnittsbereichen (26), die von der Z-Achse geschnitten wird und sich auf die -Achse erstreckt, definiert ist.

4. Kreuzförmige Schneidegerät-Reihe nach Anspruch 3, worin ein Spannen-Verhältnis der erste Spanne (S1) zu der zweite Spanne (S2) im Bereich von 0,5:1 bis 1,3:1 ist.

5. Kreuzförmige Schneidegerät-Reihe nach Anspruch 1, worin der Querschnitt des Hauptkörpers (12) eine rechteckige Form aufweist; worin jeder erste Vorsprung (14) neben den zwei zweiten Vorsprüngen (16) ist, und worin jeder zweite Vorsprung (16) neben den zwei ersten Vorsprüngen (14) ist.

6. Kreuzförmige Schneidegerät-Reihe nach Anspruch 1, worin der Querschnitt des Hauptkörpers (12) polygonal ist, und worin einer der erste Vorsprünge (14) neben mindestens einem der zweiten Vorsprünge (16) ist.

7. Kreuzförmige Schneidegerät-Reihe nach Anspruch 1, welche weiter mehrere Verstärkungsrippen umfasst; worin die Verstärkungsrippen an dem Hauptkörper (12) entlang der Z-Achse vorgesehen sind; worin jede Verstärkungsrippe mit dem ersten Vorsprung (14) und dem zweiten Vorsprung (16) verbunden ist.

8. Kreuzförmige Schneidegerät-Reihe nach Anspruch 1, worin die Zähne (30) eines der ersten Vorsprünge (14) mit den Zähnen (30) des anderen ersten Vorsprungs (14) abwechseln.

9. Kreuzförmige Schneidegerät-Reihe nach Anspruch 1, worin der Hauptkörper (12) aus Nylon 6 oder einem Nylon-Polymer besteht.

10. Kreuzförmige Schneidegerät-Reihe nach Anspruch 1, welche weiter einen Längs-Querschnitt umfasst; worin die Zähne (30) jeweils eine Weite (H1) und eine Höhe (W1) entlang des Längs-Querschnitts definieren; worin ein Seitenverhältnis der Weite (H1) zu der Höhe (W1) eines jeden Zahns (30) im Bereich von 1:1 bis 2:1 ist.

11. Kreuzförmige Schneidegerät-Reihe nach Anspruch 1, worin der Hauptkörper (12) aus Nylon 6 oder einem Nylon-Polymer hergestellt ist, und worin der erste und der zweite Vorsprung (14, 16) aus Nylon 66, Nylon 12 oder Nylon-Elastomeren hergestellt ist.

12. Kreuzförmige Schneidegerät-Reihe nach Anspruch 1, welche weiter umfasst, einen Querschnitt (20); worin der Querschnitt (20) den Haupt-Querschnitt (22) des Hauptkörpers (12) aufweist, die zwei ersten Vorsprung-Querschnittsbereiche (24), und die zwei zweiten Vorsprungs-Querschnittsbereiche (26); worin der Querschnitt (20) jeweils einen eingeschlossenen Winkel (θ) definiert; worin der eingeschlossene Winkel (θ) durch den ersten Vorsprung (14) definiert ist, der im Uhrzeigersinn zu dem zweite Vorsprung (16) dreht; worin der eingeschlossene Winkel (θ) ein rechter Winkel ist.

13. Kreuzförmige Schneidegerät-Reihe nach Anspruch 1, welche weiter umfasst, einen Querschnitt (20), worin der Querschnitt (20) den Haupt-Querschnitt (22) des Hauptkörpers (12) aufweist, die zwei ersten Vorsprungs-Querschnittsbereiche (24), und die zwei zweiten Vorsprungs-Querschnittsbereiche (26); worin die Querschnittsbereiche (20) jeweils einen eingeschlossenen Winkel (θ) definieren; worin der eingeschlossene Winkel (θ) durch den ersten Vorsprung (14) definiert ist, der im Uhrzeigersinn zu dem zweiten Vorsprung (16) dreht; worin der eingeschlossene Winkel (θ) ein spitzer Winkel ist.

14. Kreuzförmige Schneidegerät-Reihe nach Anspruch 1, worin die Zähne (30) jeweils eine Weite (W) und eine Höhe (H) entlang des Längsbereichs definieren und ein Seitenverhältnis der Weite (W) und der Höhe (H) im Bereich von 1:1 bis 2:1 ist.

15. Kreuzförmige Schneidegerät-Reihe nach Anspruch 14, worin die Zähne (30) jeweils einen Kamm (31a) entlang des Längs-Querschnitt-Bereichs definieren, und worin der Kamm (31a) eine Zackenform aufweist.

16. Kreuzförmige Schneidegerät-Reihe nach Anspruch 4, **dadurch gekennzeichnet, dass** das Spannen-Verhältnis der ersten Spanne (S1) zu der zweiten Spanne (S2) um Bereich von 0,5:1 bis 1,2:1 ist.

## Revendications

1. Fil de débroussailleuse cruciforme comprenant :
un corps principal (12) ayant un axe longitudinal s'étendant le long d'un axe Z et une section droite transversale principale uniforme (22) ;
deux premières saillies (14) agencées sur deux côtés opposés (221) de la pièce principale suivant l'axe Z, chacune de ces saillies (14) formant une dent (30) ; et
deux secondes saillies (16) agencées sur deux côtés opposés (222) de la pièce principale (22) suivant l'axe Z ;
**caractérisé en ce que** la section droite transversale principale (22) présente une pluralité de côtés adjacents (221, 222) et **en ce que** chacune des saillies (16) présente une section droite transversale uniforme.

2. Fil de débroussailleuse cruciforme selon la revendication 1, dans lequel chacune des dents (30) définit une crête (31) et un creux (32); les premières saillies (14) définissent chacune une pluralité de sections transversales de saillie (24) ayant des hauteurs différentes mesurées à partir de la crête (31) jusqu'au creux (32) ; les premières sections transversales de saillies (24) ont chacune une première largeur uniforme (W1) ; la première largeur (W1) est aussi large que les côtés correspondants (221) ; les secondes saillies (16) définissent chacune au moins une seconde section transversale de saillie (26) ; au moins une seconde section transversale de saillie (26) possède une seconde largeur (W2) laquelle est aussi large les côtés correspondants (221).

3. Fil de débroussailleuse cruciforme selon la revendication 1, comprenant en outre une section droite transversale (20) définissant un axe X s'étendant horizontalement et un axe Y s'étendant verticalement, la section droite transversale du corps principal (12), les deux premières sections transversales de saillie (24), et les deux secondes sections transversales de saillies (26) ; la section transversale (20) a une première envergure (S1) et une seconde envergure (S2) dont chacune traverse l'axe Z ; la première envergure (S1) est définie par une distance entre les deux premières sections transversales de saillie (24), traversée par l'axe Z et projetée sur l'axe Y ; la seconde envergure (S2) est définie par une distance entre les deux secondes sections transversales de saillie (26), traversée par l'axe Z et projetée sur l'axe X.

4. Fil de débroussailleuse cruciforme selon la revendication 3, dans lequel un rapport d'étendue de la première envergure (S 1) à la seconde envergure (S2) est compris entre 0,5 :1 et 1,3 :1.

5. Fil de débroussailleuse cruciforme selon la revendication 1, dans lequel la section transversale du corps principal (12) est de forme rectangulaire ; chacune des premières saillies (14) est adjacente aux deux secondes saillies (16), et chacune des secondes saillies (16) est adjacente aux deux premières saillies (14).

6. Fil de débroussailleuse cruciforme selon la revendication 1, dans lequel la section transversale du corps principal (12) est polygonale, et l'une des premières saillies (14) est adjacente avec au moins l'une des secondes saillies (16).

7. Fil de débroussailleuse cruciforme selon la revendication 1, comprenant en outre une pluralité de nervures de renforcement (28), ces nervures de renforcement (28) étant agencées disposées sur le corps principal (12) le long de l'axe Z : chaque nervure de renforcement est connectée avec une première saillie (14) et une seconde saille (16).

8. Fil de débroussailleuse cruciforme selon la revendication 1, dans lequel les dents (30) de l'une des premières saillies (14) alternent avec les dents (30) des autres premières saillies (14).

9. Fil de débroussailleuse cruciforme selon la revendication 1, dans lequel le corps principal (12) est constituée d'un nylon 6 et d'un polymère de nylon.

10. Fil de débroussailleuse cruciforme selon la revendication 1, comprenant en outre une section transversale longitudinale, les dents (30) définissent chacune une largeur (H1) et une hauteur (W1) le long de la section transversale longitudinale ; un rapport d'aspect de la largeur (H1) à la hauteur (W1) de chaque dent (30) est compris entre 1 :1 et 2 :1.

11. Fil de débroussailleuse cruciforme selon la revendication 1, dans lequel le corps principal (12) est constituée d'un nylon 6 et d'un polymère de nylon, et les premières et secondes saillies (14, 16) sont constituées d'un nylon 66, d'un nylon 12 et d'élastomère de nylon.

12. Fil de débroussailleuse cruciforme selon la revendication 1, comprenant en outre une section transversale (20), la section transversale (20) présente une section droite transversale principale (22) du corps principal (12), les deux premières sections transversales de saillies (24), et les deux secondes sections transversales de saillies (26) ; chacune des section transversales (20) définit un angle inclus (θ), l'angle inclus (θ) est défini par la première saillie (14) tournant dans le sens des aiguilles d'une montre jusqu'à la second saillie (16), l'angle inclus (θ) est un angle droit.

13. Fil de débroussailleuse cruciforme selon la revendication 1, comprenant en outre une section transversale (20), la section transversale (20) présente une section droite transversale principale (22) du corps principal (12), les deux premières sections transversales de saillies (24), et les deux secondes sections transversales de saillies (26) ; chacune des section transversales (20) définit un angle inclus (θ), l'angle inclus (θ) est défini par la première saillie (14) tournant dans le sens des aiguilles d'une montre jusqu'à la second saillie (16), l'angle inclus (θ) est un angle aigu.

14. Fil de débroussailleuse cruciforme selon la revendication 1, dans lequel les dents (30) définissent chacune une largeur (W) et une hauteur (H) le long de la section longitudinale et ont un rapport d'aspect de la largeur (W) à la hauteur (H) compris entre 1 :1 et 2 :1.

15. Fil de débroussailleuse cruciforme selon la revendication 14, dans lequel les dents (30) définissent chacune une crête (31a) le long de la section longitudinale, et la crête (31a) est en forme de pointe.

16. Fil de débroussailleuse cruciforme selon la revendication 4 **caractérisé en ce que** le rapport d'étendue de la première envergure (S1) à la seconde envergure (S2) est compris entre 0,5 :1 et 1,2 :1.
